# EUROPEAN PATENT APPLICATION

(11) **EP 4 052 565 A1**
(43) Date of publication of application: **07.09.2022**
(21) Application number: 20897361.0
(22) Date of filing: 16.11.2020
(51) Int. Cl.: A01G 7/04

(54) **AGRICULTURAL SUNLIGHT TRANSMISSION LIGHTING SYSTEM, SUPPORTING GREENHOUSE, AND SUPPORTING LIGHTING METHOD**

(30) Priority: 01.12.2019 CN 201911209799
(71) Applicant: Yuan, Tingshan, Guangzhou, Guangdong 511300 (CN)
(72) Inventor: Yuan, Tingshan, Guangzhou, Guangdong 511300 (CN)
(74) Representative: Canzler & Bergmeier Patentanwälte Partnerschaft mbB
(86) International application number: PCT/CN2020/128918
(87) International publication number: WO 2021/109842

(57) **Abstract**

Provided is a sunlight lighting system used in a greenhouse or a plant factory. The sunlight lighting system converts sunlight into light with a stable illumination direction and a controllable illumination intensity by means of a combination of a controller, a light condenser, a main driving mechanism and an illuminator (31), so that the sunlight lighting system meets lighting requirements of high-density stereoscopic cultivation frames (81). A supporting greenhouse (92) is further comprised, where a facade or a top is provided with a light through hole (99). A main optical axis of the sunlight lighting system passes through the light through hole (99). A supporting lighting method is further comprised, which can obtain a better lighting effect with fewer steps.

## Description

### TECHNICAL FIELD

The present invention relates to the field of horticultural cultivation, and particularly relates to a system integrally mounted in a greenhouse or a plant factory for lighting and supplementary lighting by using sunlight, and the greenhouse matched with the system and a lighting method.

### BACKGROUND

The development direction of modern agriculture is facility agriculture, and the development direction of facility agriculture is the plant factory capable of regulating and controlling the growth environment of crops precisely. With respect to water, air, nutrients, temperature and humidity essential for crop growth, existing regulating and controlling technologies are sophisticated. It is difficult to regulate and control illumination, which is the bottleneck of agricultural technological development.

In order to utilize unit area of land highly, the cultivation pattern tends to development towards stereoscopic cultivation. Modern greenhouses are usually provided with stereoscopic cultivation frames for perpendicular cultivation, so that the cultivation area on the unit area of land is increased, and therefore, the output is increased. For example, the cultivation pattern includes column cultivation, A-frame cultivation, roller cultivation and the like. High-density stereoscopic cultivation is defined different from cultivation in the open and mainstream planar cultivation in the greenhouse, the cultivation frames of high-density stereoscopic cultivation are arranged stereoscopically, and the cultivation area shall be obviously greater than the planar area if the cultivation frames are paved on the plane. However, in the greenhouse lighted directly by sunlight, only cultivated objects in the uppermost layers of the cultivation frames can receive enough sunlight as a result of such a design, and the lower layers of the cultivation frames will be sheltered by the upper layers and adjacent cultivation frames. As the sun rises from the east and falls from the west, the sunlight angle is changed constantly, which will also bring a problem of change of illumination intensity at different positions of the stereoscopic cultivation frames at different times. Columns and brackets in the greenhouse will also shelter the sunlight and project shadows, which results in insufficient illumination in part of areas in the greenhouse. In order to alleviate the problem that the stereoscopic cultivation frames shelter illumination, the stereoscopic cultivation frames are usually spaced at a large interval, so that the cultivation density is reduced, and it is difficult to realize high-density stereoscopic cultivation.

In order to solve the above-mentioned problems, it is difficult to obtain enough sunlight by using an artificial light source in the technical solution instead of lighting by sunlight, for example, in a multi-span glass greenhouse for cultivating tomatoes, leaves in the lower layers of canopies of indeterminate growth tomato plants perpendicularly climbing and growing are sheltered by leaves in the upper layers. Under a circumstance of using an agricultural sodium lamp to supplement light, the agricultural sodium lamp arranged in the top of the greenhouse still hardly irradiates the leavers in the lower layers of the canopies, so that part of healthy leaves in the lower layers of the canopies will be removed. Therefore, there is a report that Netherlandish scientific research personnel arranges an led fill light in the lower layer of the canopy of tomato, and domestic multi-span glass greenhouse operators attempt the same supplementary lighting mode subsequently and obtain higher output.

In order to solve the problem of high-density stereoscopic cultivation of crops, total artificial light plant factories also called perpendicular farms have emerged in recent years, for example, AeroFarms in US and Zhongke Sanan Plant Factory in China. There are multiple layers of cultivation frames, and each layer is provided with lighting by means of an artificial light source, thereby a high-density stereoscopic cultivation effect is achieved. However, it is reported that even lettuces with low requirement on illumination are cultivated by using energy-saving red and blue led light sources, lighting of the cultivation area per square meter needs a power consumption of approximately 100W and needs 66 kilowatt power consumption, so that the cultivation cost is increased due to excessive energy consumption, and thus, development of the total artificial light plant factories is restricted.

Sunlight is either the most direct and effective free light source on the Earth or a source of fossil energy, wind energy and water energy on the Earth, and therefore, other technical teams also attempt to solve the problem of high-density stereoscopic cultivation under sunlight lighting with different technical solutions.

Some technical solutions refer to design of cultivation frames capable of moving to track sunlight movement.

According to an automatic sun-tracking multilayered stereoscopic strawberry cultivation system disclosed by a domestic invention patent with application No. 201410788355.1, the cultivation frames are driven by a motor to follow rotation of sunlight so as to obtain stable lighting. There is a problem that the cultivation frames are large in sheer weight, so that the energy consumption of the motor is also high.

With respect to skygreens corporation, Singapore, cultivation grooves for vegetables are formed in cultivation frames driven hydraulically to circulate up and down, so that vegetables in each layer are elevated in sequence to the top of the greenhouse with sufficient sunlight to receive sunlight lighting and are then dropped in sequence to a water channel in the bottom to absorb water. According to the cultivation pattern, the cultivation density is multiple times larger than that of the multi-span glass greenhouse, and belongs to high-density stereoscopic cultivation. The output of vegetables is higher than that of the multi-span glass greenhouse. There is a problem that a hydraulic driving device is low in operating speed, vegetables in each cultivation groove receive sunlight lighting with enough intensity for a shorter time and are located in the lower layers of the cultivation frames with insufficient lighting for a longer time, and the growth speed of the vegetables is lower than that of the multi-span glass greenhouse for single layer cultivation. Although the cultivation density is multiple times of that of the multi-span glass greenhouse, the output is not improved for multiple times, and there is still a problem of limitation by insufficient lighting.

AgriGarden in China has developed a mobile multilayered stereoscopic track cultivation system. The vegetable cultivation groove moves on the multilayered stereoscopic track, which improves the problem that the vegetable growth speeds are different as a result of different sunlight light intensities at different positions of the stereoscopic cultivation frame in a common multi-span greenhouse. In recent years, the domestic agricultural fair has still exhibited a design in which the cultivation grooves are suspended on the track, the cultivation grooves are transported to areas with strong illumination in sequence and are then transported back to areas with the weak illumination by the track. Under a circumstance of close cultivation densities, the two patterns are similar with the skygreens corporation, Singapore in sunlight lighting effect.

When searching for related inventions in the field, we have found some solutions applying optical fiber techniques and light guide pipe techniques in the field.

Two technical solutions: a domestic utility model patent with application No. 201520431694.4 and a domestic invention patent with application No. 201710905698.5 both use a light guide pipe as an intermediate transmission medium. There are problems that in light guide pipe transmission, the optical loss is large; the longer the light guide pipe is, the smaller the diameter is; and the more the reflecting time is, the larger the loss is. For example, with respect to a light guide pipe with reflectivity of 0.95, the light energy loss after internal reflection for 10 times exceeds 40%. In addition to loss of a dome skylight, the loss at the connection, the loss of a diffuser and the comprehensive loss of light energy are excessive.

The technical solutions: the domestic utility model patent with application No. 201120361809.9 and a domestic invention patent with application No. 201110121985.X both use a fiber bundle as an intermediate transmission medium, wherein an optical coupler, optical fiber transmission, an optical splitter and a light output lamp will cause the optical loss, so that there is still a problem of large light energy loss. Moreover, the optical fiber has different transmittance to different spectra, and particularly has a larger shielding effect to ultraviolet rays and infrared rays which are advantageous to plant growth.

A light guide pipe lighting technique and an optical fiber guided lighting technique are frequently applied in lighting of residential buildings and public buildings with a direct sunlight illumination intensity in a clear day reaching 60000 lx to 100000 lx. In accordance with Design Standard of Building Lighting in China, the illumination intensity for the residual building only needs to be 30 lx to 300 lx and that for the public building is 50 lx to 500 lx. The sunlight illumination intensity is hundred times to several thousand times of the illumination intensity required by building lighting. Therefore, although having large loss in light transmission, the light guide pipe lighting technique and the optical fiber guided lighting technique still can meet ordinary building lighting demands.

However, the illumination intensity required by plant growth is multiple times higher than the illumination intensity required in life, for example, the illumination intensity of a light compensation point of lettuces is approximately 3000 lx, and that at a light saturation point is 70000 lx. The lettuces will wither if the illumination intensity is lower than 3000 lx. The illumination intensity for cultivating lettuces in the artificial light plant factory is higher than 10000 lx to meet the needs for normal growth.

The solution capable of solving ordinary building lighting in the prior art cannot meet the demand of agricultural lighting. Therefore, the lighting efficiency is low, and it is difficult to apply the light guide pipe technique and the optical fiber guided technique with large loss in plant cultivation in the light transmission process.

There are still other problems in sunlight lighting of the multi-span glass greenhouse and a plastic shed. Lighting surfaces of the fixedly built greenhouse and shed are fixed, and proper lighting angles cannot be kept in the process that the sun rises from the east and falls from the west. A photoinhibition phenomenon easily occurs in the green house and the shed at noon as a result of excessive illumination, and obstacles of plants by a high temperature are easily caused in the greenhouse at noon due to overtemperature. It needs to provide shade and cooling, so that a window shade is needed for the glass greenhouse, and a greenhouse membrane of the greenhouse is sprinkled with muddy water to reduce the illumination intensity of the incident light. As a consequence, existing glass greenhouses and sheds also waste a number of sunlight resources, with low utilization ratio of sunlight.

Thus, there is a need of a sunlight lighting system which is good in lighting effect and less in light transmission loss with the illumination intensity capable of meeting the demand on normal growth of plants. Furthermore, the system shall also be able to meet the demand on high-density stereoscopic cultivation.

### SUMMARY

The present invention intends to solve the technical problem that it is difficult to realize high-density stereoscopic cultivation by sunlight lighting. In order to solve the problem, the present invention provides an agricultural sunlight transmission lighting system, a greenhouse matched with the system and a lighting method.

An agricultural sunlight transmission lighting system includes a controller, a light condenser, a main driving mechanism and an illuminator, wherein controlled by the controller, the light condenser is driven by the main driving mechanism to track the sun so as to reflect and/or refract sunlight to the illuminator, and the illuminator provides lighting to an illuminated object.

With respect to the stereoscopic cultivation frame fixedly arranged on an agricultural facility, it is difficult to design a structure through which vegetables cultivated in different positions still obtain stable lighting when illuminating angles of the sun change constantly. A solution that a cultivation device designed to move along with the sunlight will bring about problems of complex moving device, large weight load of movement and high-energy consumption. By applying an agricultural sunlight transmission lighting system provided by the present invention, the sunlight of the sun that rises in the east and sets in the west with constantly changing illuminating angles can be converted into sunlight with stable illuminating angles. Under a condition of the stable illuminating angles, an appositeness high-density stereoscopic cultivation frame can be designed. Therefore, the present invention can solve the problem that it is difficult to realize high-density stereoscopic cultivation by sunlight lighting.

Preferably, the illuminator is a reflector, a lens, a light guide plate or a combination thereof, and provides lighting to microalgae or plants.

The illuminators can be designed according to light intensities and lighting areas required by microalgae or plants due to different optical designs and combinations, and have the advantage of fitting the lighting demand on growth of different plants. For example, with respect to plants requiring high lighting, the illuminators can be designed with gathered irradiation areas and high lighting. With respect to plants requiring weak lighting, for example, common leaf vegetables and noble medicinal materials such as *panax notoginseng,* ginseng, *dendrobium officinale* and *anoectochilus roxburghii* requiring weaker lighting as well as microalgae, the irradiation areas of the illuminators can be increased, and the light intensities can be decreased.

Preferably, a light path between the light condenser and the illuminator is provided with one or more light guide mirrors. The light guide mirror is in the shape of a plate, a curved plate, a wheel, a pyramid, a prism, a windmill or a fan blade, a reflecting surface is a plane or a curved surface, and the light guide mirror and/or the illuminator are fixedly installed or are driven to move by a secondary driving mechanism.

By additionally arranging the light guide mirror, the trend of the light path can be changed more flexibly, bypassing obstacles in the facility. By additionally arranging the secondary driving mechanism, the light guide mirror and the illuminator can be turned into a moving state. The moving light guide mirror or illuminator can change the direction of the light path, so that an emitted beam has a scanning effect, and an illuminated plant obtains an alternating light and dark pulse lighting effect under the scanning beam. According to characteristics of a light reaction and a dark reaction of photosynthesis of the plant, alternating light and dark lighting can obtain higher light utilization efficiency under same light energy, thereby contributing to improvement of output.

Preferably, a fill light shall be further arranged which includs a driving circuit and a light source, and the driving circuit outputs a pulse current to drive the light source to give out pulsed light.

By additionally arranging the fill light, normal growth of the plants can also be ensured in cloudy days or at night. The fill light can provide supplementary lighting for the plants in a more energy saving manner by emitting pulse light.

Preferably, a fill light shall be further arranged in front of the light guide mirror or the illuminator that are driven to move by the secondary driving mechanism. The fill light includes a driving circuit, a spotlight reflector and a light source, and a beam emitted by the fill light passes through the moving light guide mirror and/or the moving illuminator to provide scanning-type lighting to the illuminated object.

The preferred solution has the beneficial effect that the stable beam emitted by the fill light can become pulse light by passing through the moving illuminator or light guide mirror, so as to provide supplementary lighting for the plants in a more energy saving manner.

A solar photo-thermal utilization device shall be further arranged, for example, a solar cell panel and/or a solar heat collecting tube. The solar photo-thermal utilization device is arranged on a branched light path of the light condenser or a branched light path of the moving light guide mirror. The light condenser driven by the main driving mechanism can move the beam from a main light path to the solar photo-thermal utilization device on the branched light path, or the light guide mirror driven by the secondary driving mechanism can move the beam from the main light path to the solar photo-thermal utilization device on the branched light path.

By additionally arranging the solar photo-thermal utilization device, the collected sunlight can be used for power generation or heat collection when lighting is not needed indoors, and the collected heat can be used for raising the air temperature of the greenhouse or raising the temperature of a culture solution. A comprehensive utilization effect of the sunlight is realized.

The present invention further provides a greenhouse matched with the agricultural sunlight transmission lighting system, wherein a facade or a top of the greenhouse is provided with one or more light through holes. A main optical axis of the agricultural sunlight transmission lighting system provided by the present invention passes through one of the light through holes, and the greenhouse is internally provided with a supporting device of the illuminator.

The greenhouse provided by the present invention can be cooperated with a sunlight transmission lighting system provided by the present invention, and is provided with corresponding light through holes and corresponding installation positions. The greenhouse can be internally provided with the high-density stereoscopic cultivation facility corresponding to the agricultural sunlight transmission lighting system provided by the present invention to better achieve the effect of high-density stereoscopic cultivation.

Preferably, a suspended rail is arranged above the greenhouse, and an agricultural robot and/or a basket can operate on the suspended rail, or the agricultural robot and/or the basket can be transported on the suspended rail.

By additionally arranging the suspended rail, it is more favorable for the agricultural robot to operate in the greenhouse, and therefore, the agricultural robot does not need to occupy an aisle position.

The present invention further provides a lighting method for obtaining a larger effective lighting cultivation area by utilizing sunlight, and effective lighting refers to lighting capable of meeting the demand on normal growth of plants. The method includes the following steps:
step a, tracking, by a light condenser driven by a main driving mechanism, the sun;
step b, reflecting and/or refracting, by the light condenser, sunlight to an illuminator; and
step c, providing, by the illuminator, lighting to microalgae or plants.

Its beneficial effect is to collect the sunlight efficiently, transmit the sunlight and reduce the light energy loss.

Preferably, the step b of the method can be decomposed into steps b11 and b12:
step b11. reflecting and/or refracting, by the light condenser, the sunlight to the light guide mirror; and
b12: rotating the light guide mirror driven by the secondary driving mechanism to project the beam to a plurality of illuminators sequentially in a scanning manner;

Preferably, the step b of the method can be decomposed into steps b21 and b22:
B21. reflecting and/or refracting, by the light condenser, the sunlight to the light guide mirror; and
B22: reflecting, by the light guide mirror, to the illuminator driven by the secondary driving mechanism to move;

Its beneficial effect is to further improve the utilization ratio of plant photosynthesis to light energy, further increase the effective lighting area under a condition of same collected sunlight area, and improve the cultivation density.

### BRIEF DESCRIPTION OF DRAWINGS

FIG. 1 is a schematic diagram of the present invention applied to balcony cultivation.
FIG. 2 is a schematic diagram of the present invention applied to multi-span greenhouse cultivation.
FIG. 3 is a schematic diagram of the present invention applied to supporting multilayered greenhouse cultivation.
FIG. 4 is a schematic diagram of the present invention applied to a photobiological reactor to culture microalgae.
FIG. 5 is a schematic diagram of the present invention applied to greenhouse cultivation with a fixed light guide mirror cooperating with a moving illuminator.
FIG. 6 is a partial schematic diagram of the present invention applied to a moving light guide mirror cooperating with a plurality of fixed illuminators.

### DETAILED DESCRIPTION OF EMBODIMENTS

Further description of the present invention in detail will be made below through specific embodiments in combination with drawings.

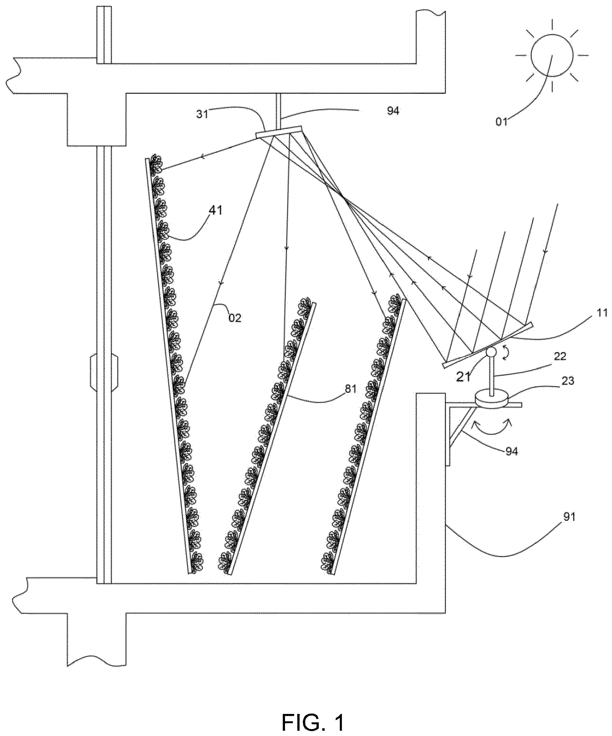

FIG. 1 is a schematic diagram of the present invention applied to balcony cultivation. A main driving mechanism consists of a pitching driving shaft 21, a perpendicular arm 22 and a horizontal driving shaft 23.The horizontal driving shaft 23 is installed outside a balcony guard bar 91 through a fixed bracket 94, and the pitching driving shaft 21 is connected with a reflecting condenser mirror 11. A controller can be installed in a hidden manner, for example, it can be arranged in the main driving device. A cultivation frame 81 is perpendicularly arranged in a balcony, and flowers and plants or vegetables 41 are cultivated on the cultivation frame 81. An illuminator 31 which is a plane mirror is installed on the top of the balcony through the fixed bracket 94.

When the system in the embodiment works, the controller outputs a control signal to drive the horizontal driving shaft 23 and the pitching driving shaft 21 of the main driving mechanism to drive the reflecting condenser mirror 11 to track the sun 01 so as to reflect the sunlight 02 to the illuminator 31. The illuminator provides lighting to the flowers and plants or vegetables 41.

In regions with high latitudes, the reflecting condenser mirror 11 and the main driving mechanism can be arranged in the balcony guard bar 91 and also can keep lighting without shelter all the year. The cultivation frames 81 can further be arranged on walls on the left and right sides of the balcony. If the illuminator 31 is improved into a non-spherical reflector, the cultivation frames in different positions can provide more even lighting according to an optical design. The illuminator further can have various optical designs.

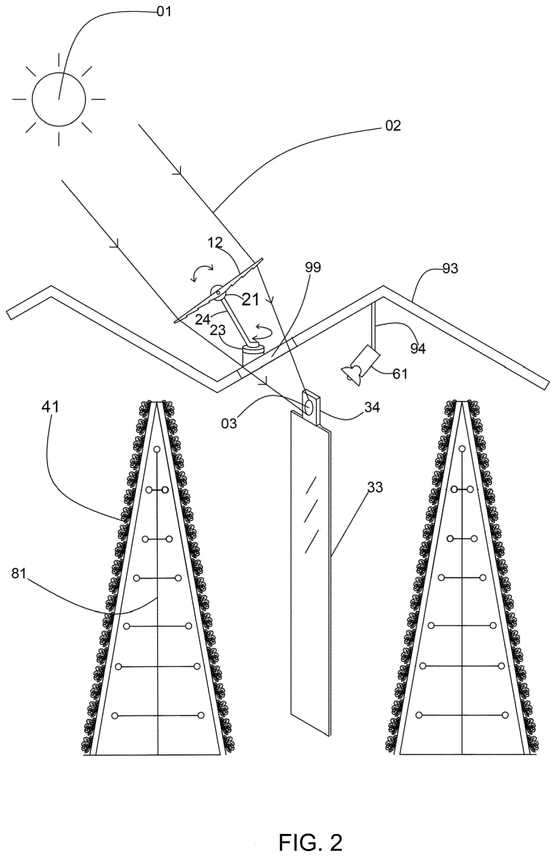

FIG. 2 is a schematic diagram of the present invention applied to multi-span greenhouse cultivation. A main driving mechanism is installed on a transmitting top 93 of the greenhouse, and the main driving mechanism consists of a pitching driving shaft 21, a perpendicular arm 24 and a horizontal driving shaft 23. The pitching driving shaft 21 is connected with a Fresnel condenser lens 12. A controller can be installed in a hidden manner, for example, it can be arranged in the main driving device. The cultivation frame 81 which is an A-shaped frame is arranged in the multi-span greenhouse, and flowers and plants or vegetables 41 are cultivated on the cultivation frame 81 in an aerial fog cultivation method. The illuminator of a light guide plate structure consists of a light absorbing portion 34 of a light guide plate and a light emitting portion 33 of the light guide plate. A pulse fill light 61 is further arranged on the top side of the greenhouse and is installed on a greenhouse frame through the fixed bracket 94. An irradiation area of the pulse fill light 61 is the light absorbing portion 34 of the light guide plate.

When the system in the embodiment works, the controller outputs the control signal to drive the horizontal driving shaft 23 and the pitching driving shaft 21 of the main driving mechanism to drive the Fresnel condenser lens 12 to track the sun 01 so as to gather the sunlight 02 to the light absorbing portion 34 of the light guide plate of the illuminator through the light through hole 99 covered with a transparent material. The light emitting portion 33 of the light guide plate diverges and irradiates the sunlight 02 to the flowers and plants or vegetable 41 arranged on the cultivation frames 81 around the light guide plate arranged in the multi-span greenhouse. In cloudy days or at night, the pulse fill light 61 starts to operate to emit pulse light irradiated to the light absorbing portion 34 of the light guide plate, providing fill lighting to the cultivated flowers and plants or vegetables 41 through the light emitting portion 33 of the light guide plate.

03 is a schematic diagram of light spots.

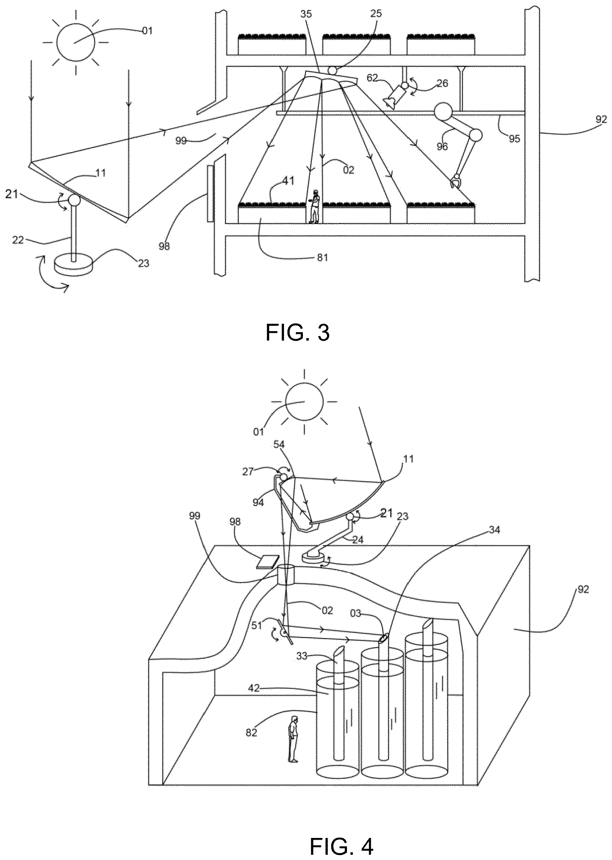

FIG. 3 is a schematic diagram of the present invention applied to supporting multilayered greenhouse cultivation. A main driving mechanism consists of a pitching driving shaft 21, a perpendicular arm 22 and a horizontal driving shaft 23. A base of the main driving device is installed on the ground or a nearby roof lower than the greenhouse 92. One greenhouse can be provided with a plurality of main driving mechanisms and light condensers. The pitching driving shaft 21 is connected with the reflecting condenser mirror 11. The controller can be installed in a hidden manner, for example, it can be arranged in the main driving device. The controller controls the main driving mechanism and the secondary driving mechanisms 25 and 26 to move in a wireless connection manner. The cultivation frame 81 is horizontally arranged in the greenhouse 92 for earth culture or soilless culture, and flowers and plants or vegetables 41 are cultivated on the cultivation frame 81. The type of the illuminator is a splitting illuminator 35 which is installed on the top of the greenhouse through the secondary driving mechanism 25. The splitting illuminator 35 can reflect one beam into multiple beams through an optical design. A current-constant fill light 62 is further arranged on the top side of the greenhouse and is installed on the upper side of the greenhouse through the secondary driving mechanism 26. A horizontal moving guide rail 95 is further arranged in the middle-upper part in the greenhouse 92, and a robot 96 operates on the guide rail in a suspended manner. A solar photo-thermal utilization device 98 is further arranged on the facade of the greenhouse, and the solar photo-thermal utilization device 98 consists of a solar cell panel and/or a solar heat collecting tube.

When the system in the embodiment works, the controller outputs a control signal to drive the horizontal driving shaft 23 and the pitching driving shaft 21 of the main driving mechanism to drive the reflecting condenser mirror 11 to track the sun 01 so as to gather the sunlight 02 and irradiate the sunlight to the splitting illuminator 35 through the light through hole 99. Multi-beam sunlight 02 reflected by the splitting illuminator 35 respectively provides lighting to the flowers and plants or vegetables 41 on the plurality of cultivation frames 81. The splitting illuminator 35 further can rotate back and forth perpendicular to a principal plane under drive of the secondary driving mechanism 25 to generate scanning light spots perpendicular to the principal plane so as to provide scanning pulse lighting to the flowers and plants or vegetables 41 on the cultivation frames 81 in a large area. In cloudy days or at night, the current-constant fill light 62 starts to operate, and is driven by the secondary driving mechanism 26 to rotate parallel to the principal plane or perpendicular to the principal plane so as to provide fill lighting to the flowers and plants or vegetables 41 on the cultivation frames 81 in the large area. When there is sunlight 02 without need of lighting, the main driving mechanism drives the condenser mirror to move the light spots from a main light path and turns them to the solar photo-thermal utilization device 98 on the branched light path for power generation or heat collection. The collected heat can be used for raising the temperature of the greenhouse 92, can increase the room temperature rapidly in a cold environment and further can insulate and heat the culture solutions in the cultivation frames 81.

FIG. 4 is a schematic diagram of the present invention applied to a photobiological reactor to culture microalgae. A main driving mechanism consists of a pitching driving shaft 21, an L-shaped crank arm 24 and a horizontal driving shaft 23.The main driving mechanism is installed on the top of the greenhouse. The pitching driving shaft 21 is connected with the reflecting condenser mirror 11. A downward light guide mirror 54 is driven by a secondary driving mechanism 27 in uniaxial movement to perform pitching rotation so as to turn the beam downwards to pass through the light through hole 99. The fixed bracket 94 provided with the secondary driving mechanism 27 and the downward light guide mirror 54 is fixedly connected with a body of the condenser mirror 11. A vibrating light guide mirror 51 is arranged in the greenhouse 92, and a rotating shaft of the vibrating light guide mirror 51 is connected with a galvanometer motor. The controller can be installed in a hidden manner, for example, it can be arranged in the main driving device. The controller controls the main driving mechanism and the secondary driving mechanisms 27 and the galvanometer motor to move in a wireless connection manner. A plurality of photobiological reactors 82 are arranged in the cultivation area, and the photobiological reactors are provided with the culture solutions and microalgae 42. One or more light emitting portions 33 of the light guide plate curled into cylinders are inserted into the one or more photobiological reactors, and one end of the light guide plate is provided with the light absorbing portion 34 of the light guide plate. The light through hole 99 is further formed in the top of the greenhouse, and the solar photo-thermal utilization device 98 is arranged on the top of the greenhouse near the light through hole 99 and consists of a solar cell panel and/ and\ or a solar heat collecting tube.

When the system in the embodiment works, the controller outputs a control signal to drive the main driving mechanism, the secondary driving mechanism 27 and the galvanometer motor of the vibrating light guide mirror, respectively. An optical axis of the reflecting condenser mirror 11 directly faces the sun to track the sun 01 and gathers the sunlight 02 to the downward light guide mirror 54, and the downward light guide mirror 54 conducts the sunlight downwards and irradiates the sunlight to the vibrating light guide mirror 51 through the light through hole 99. The vibrating light guide mirror 51 driven by the galvanometer motor rotates back and forth along the rotating shaft to reflect the beam into a scanning beam that swings back and forth. The beam scans and irradiates different light absorbing portions 34 of the light guide plate sequentially, and rays absorbed by the light guide plate provide lighting to the microalgae in the culture solutions of the photobiological reactors through the light emitting portions 33 of the light guide plate. When there is sunlight 02 without need of lighting, the secondary driving mechanism 27 drives the downward light guide mirror 54 to move the light spots from the main light path and turns them to the solar photo-thermal utilization device 98 on the branched light path for power generation or heat collection. The collected heat can be used for raising the temperature of the greenhouse 92, and can be used for heating the culture solutions in the photobiological reactors 82.

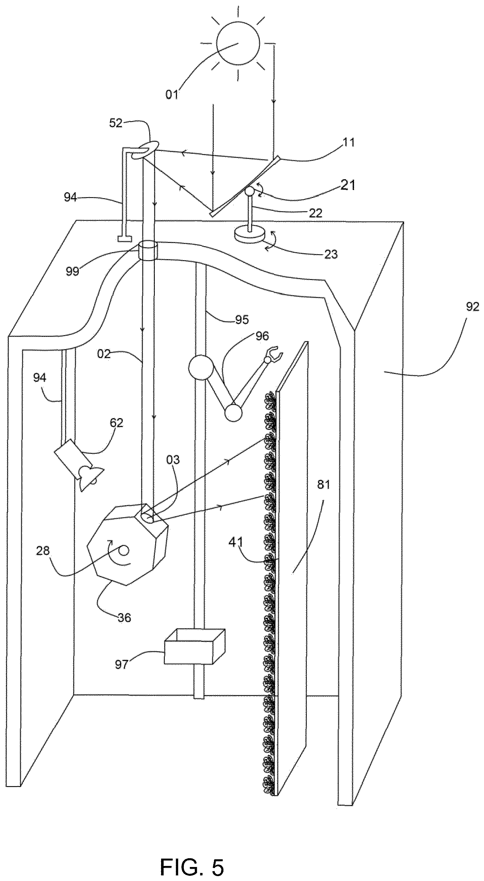

FIG. 5 is a schematic diagram of the present invention applied to greenhouse cultivation with a fixed light guide mirror cooperating with a moving illuminator. A main driving mechanism consists of a pitching driving shaft 21, a perpendicular arm 22 and a horizontal driving shaft 23. A base of the main driving mechanism is installed on the top of the greenhouse. The pitching driving shaft 21 is connected with the reflecting condenser mirror 11, and a mirror surface of the reflecting condenser mirror 11 is a tire reflecting surface. A fixed downward light guide mirror 52 is installed above a light through hole 99 on the top of the greenhouse 92 through a fixed bracket 94. The greenhouse is internally provided with a prismatic illuminator 36 formed by a plurality of reflecting lenses. A rotating shaft of the prismatic illuminator 36 is connected with a secondary driving mechanism 28. The secondary driving mechanism 28 is fixedly installed in the greenhouse. A cultivation frame 81 is perpendicularly arranged, and flowers and plants or vegetables 41 are cultivated on the cultivation frame. The greenhouse 92 is further internally provided with a perpendicular moving guide rail 95. A robot 96 and a basket 97 move and operate up and down on the guide rail. The greenhouse 92 is further internally provided with a constant-current fill light 62. A reflecting cover of the current-constant fill light is designed as a spotlight reflector which can irradiate a collecting beam like a beam irradiated by searchlight. The current-constant fill light 62 is installed next to the prismatic illuminator 36 through the fixed bracket 94 to illuminate a reflecting surface of the prismatic illuminator in an inclined direction.

When the system in the embodiment works, the controller outputs a control signal to drive the main driving mechanism and the secondary driving mechanism 28. The reflecting condenser mirror 11 tracks the sun 01 and gathers the sunlight 02 to the fixed downward light guide mirror 52, and the downward light guide mirror conducts the sunlight downwards and irradiates the sunlight to the rotating prismatic illuminator 36 through the light through hole 99. The rotating prismatic illuminator 36 reflects the beam into a scanning beam that scans the cultivation frame 81 from top to bottom. Due to different numbers and rotating speeds of the irradiated surfaces of the prismatic illuminator, the light and dark alternating frequencies of the pulse lighting obtained by the flowers and plants or vegetables 41 on the cultivation frames are different. Due to different optical designs of curved surfaces of the reflecting surfaces of the prismatic illuminator, the instantaneous illumination intensity and the light and dark duty cycle of the pulse lighting obtained by the flowers and plants or vegetables 41 on the cultivation frames are different.

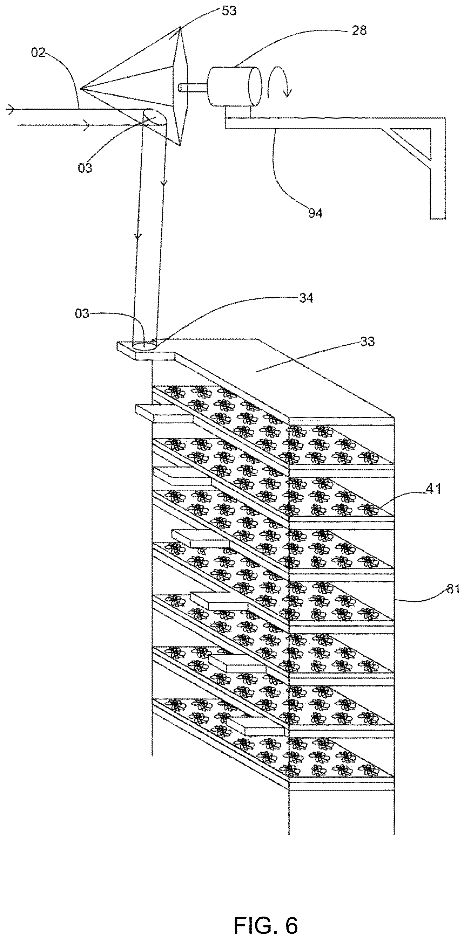

FIG. 6 is a partial schematic diagram of the present invention applied to a moving light guide mirror cooperating with a plurality of fixed illuminators. With respect to a multilayered cultivation frame 81, flowers and plants or vegetables 41 are cultivated in the cultivation area on the lower portion of each layer of cultivation frame. The upper portion of each layer of cultivation frame is provided with the illuminator which is a light guide plate type, and rays of the light emitting portion 33 of the light guide plate provides lighting to the cultivation area downwards. One end of the light guide plate is provided with the light absorbing portion 34 in a protruding manner. Positions of the relatively moving light guide mirrors 53 of the plurality of light absorbing portions 34 of the light guide plate in different layers do not shelter each other in view. The moving light guide mirror 53 is designed in a prismatic shape with a plurality of reflecting surfaces. The rotating shaft is driven by the secondary driving mechanism 28 to rotate. The secondary driving mechanism is fixedly installed in the greenhouse through the fixed bracket 94.

When the system in the embodiment works, the controller controls the secondary driving mechanism 28 to rotate to drive the prismatic light guide mirror 53 to rotate to irradiate an incident beam to the light absorbing portions 34 of the light guide plate in different layers sequentially, and then the light absorbing portion 33 of the light guide plate provides pulse lighting to the flowers or plants 41 in the cultivation frame 81.

Due to different numbers and rotating speeds of the irradiated surfaces of the prismatic moving light guide mirrors, the light and dark alternating frequencies of the pulse lighting obtained by the flowers and plants or vegetables 41 on the cultivation frames 81 are different. Due to different optical designs of curved surfaces of the reflecting surfaces of the prismatic moving light guide mirrors, the instantaneous illumination intensity and the light and dark duty cycle of the pulse lighting obtained by the flowers and plants or vegetables 41 on the cultivation frames are different.

The illuminator in the embodiment can also be designed to be a combination of other optical frames. For example, the light absorbing portion 34 can be arranged as a mirror reflecting lens which forms double reflectors with another reflector or multiple reflectors in the area of the top 33 of the cultivation area. The beam irradiated from the moving light guide mirror can provide lighting to the plants when being reflected only twice, with a Z-shaped light path. The light path of the embodiment is zigzag, and the ray is internally reflected for many times in the light guide plate.

The embodiments of the present invention are not limited by the above-mentioned specific embodiments. Those skilled in the art can design various variants within the scope of the technical solution protected by the present invention or achieve the same technical effect of the present invention by similar technical means. The present invention further has the following various implementation details.

There are many ways for the controller to obtain real-time position information of the sun. One way is to record the local geographical location parameters and the annual moving track parameters of the sun, calculate the real-time elevating angle and azimuth angle of the sun according to time and output a corresponding control signal, so as to control operation of the system of the present invention. The second way is that the controller can input azimuth information of the sun measured in the field annually so as to calculate and obtain the real-time position information of the sun according to time. The third one is to additionally arrange a light position sensor which can be installed on the light condenser to feed the position information of the sun in real time to the controller so as to correct movement of the main driving mechanism. The light position sensor can also be installed on the main light path to feed deviation information of the light path back to the controller so as to make correction. The controller can be installed in a hidden manner. For example, it can be integrally installed with the main driving mechanism and an industrial control panel of the controller can also be installed in a building. One controller can either control a set of system provided by the present invention or control a plurality of sets of systems provided by the present invention in cluster. The control signal of the controller can be either connected with the main driving mechanism through a line or connected in a wireless mode. The controller, the main driving mechanism and the secondary driving mechanism connected in the wireless mode are respectively provided with matched wireless transceiving units.

The light condenser can be a Fresnel condenser lens, a spherical reflector, a non-spherical reflector, a parabolic mirror, an off-axis parabolic mirror, a catadioptric lens in the field of telescope, double reflectors and a tread reflector used in the field of heliostat, or a bi-reflecting light condenser formed by combining a plane mirror on the heliostat with a fixed curved mirror. The collecting mode of the light condenser includes two types: first, the optical principal axis of the light condenser directly faces the sun, and the position of the focus relative to the lens body of the light condenser is unchanged; second, heliostat tracks the sun and collect sunlight. The light condenser can further be provided with a dome type protective cover for preventing rain and dust.

The main driving mechanism at least has two moving shafts, a horizontal moving shaft responsible for tracking the solar azimuth of the sun and a pitching moving shaft responsible for tracking the elevating angle of the sun. For example, a double-shaft driving device, the horizontal moving shaft and the pitching moving shaft of the heliostat are connected one another with perpendicular arms. A nonperpendicular connecting arm can further be arranged between the horizontal moving shaft and the pitching moving shaft, the nonperpendicular connecting arm can be of a structure of an oblique arm or an L-shaped crank arm or a U-shaped crank arm, and the bottom of the U-shaped crank arm is connected with the horizontal driving shaft. The length of the nonperpendicular connecting arm is within a range of 0.3 time to 2 times of the focal length of the light condenser. The design has an effect that the lens body of the light condenser rotates around the focus nearby when the horizontal moving shaft of the main driving mechanism rotates. The horizontal moving shaft or the pitching moving shaft can be configured as a motor and a speed reducer. The main driving mechanism can further be designed in other ways. For example, a moving mechanism with more than three shafts can realize a moving effect of two moving shafts as well.

The illuminator plays a role of providing a proper lighting condition to the lighted object. The illuminator can be a reflector such as a spherical reflector, a non-spherical reflector, a plane mirror and a diffuse reflector; the illuminator can be a lens such as a convex lens, a concave lens and a diffusing lens; the illuminator can be a light guide plate and a light guide column; and the illuminator can further be formed by combining the optical frames in above various forms or a lens body of the illuminator is provided with a plurality of reflecting surfaces or refracting surfaces. The illuminator can be either fixedly installed or installed on the secondary driving mechanism. The irradiated objects of the illuminator are organisms with photosynthetic pigments, such as photosynthetic bacteria, microalgae and plants. According to design and layout of the illuminator, the illuminator can be designed according to light intensities required by microalgae or plants. With respect to plants requiring high lighting, for example grain crops, melons and fruits and tropic plants, the illuminator can be designed with a small irradiation areas and high lighting intensity. With respect to plants requiring weak lighting, for example, common leaf vegetables and noble medicinal materials, the illuminator can be designed with a larger irradiation area. For example, an led is used as a light source to cultivate lettuces, the illumination intensity is only 1/10 to 1/5 of that of the direct sunlight to meet the demand on lettuce growth. So the demand on lettuce cultivation in the cultivation area in a unit area can be met by collecting direct sunlight in a unit area. With respect to noble medicinal materials requiring lower illumination intensity, for example, *panax notoginseng, ginseng, dendrobium officinale* and *anoectochilus roxburghii,* the cultivation and culture demands in more than 10 times of unit area can be met by collecting sunlight in the unit area.

The light guide mirror has the function of changing the direction of the light path. The light guide mirror can be either fixedly installed or installed on the secondary driving mechanism. The light guide mirror is in the shape of a plate, a curved plate, a wheel, a pyramid, a prism, a windmill or a fan blade, one light guide mirror can have a plurality of reflecting surfaces, and the reflecting surface can be a plane, a curved surface or a zigzagged surface. One light guide mirror in the moving state can guide the beam to the plurality of illuminators in a same space by way of scanning, and lighting obtained by each illuminator is light and dark alternate lighting. Under a circumstance of invariable lighting condition and illuminator condition, the light and dark alternate pulse frequencies of lighting obtained by each illuminator are different due to different numbers of the reflecting surfaces and rotating speeds of the light guide mirrors. Due to different optical designs of reflecting surfaces of the reflecting surfaces of the light guide mirror, the light and dark alternate duty cycle of the lighting obtained by the each illuminator are different. Under the condition, the plants irradiated by the illuminator obtain dark and light alternate lighting correspondingly, and the instantaneous illumination intensity and the light and dark duty cycle of the lighting are decided by design and rotating speed of the illuminator.

In the embodiment of the present invention, one set of system can be provided with one or more secondary driving mechanisms. The secondary driving mechanism can be either connected with the illuminator, or connected with the light guide mirror and the fill light. The secondary driving mechanism can be either a uniaxial moving mechanism or a moving mechanism with more than two shafts. The secondary driving mechanism can be formed by an independent motor and/or a transmission device. The transmission device can be in gear transmission and belt transmission and can also be a connecting rod mechanism. In the solution where the illuminator or the light guide mirror is driven to rotate back and forth, the motor is designed to be the galvanometer motor.

The light source of the agricultural sodium lamp or led lamp or other artificial light sources with light emitting spectra suitable for fill lighting of plants. The fill light includes a driving circuit, a light source and a reflecting cover. The driving light source can output a direct current, so that the light source emits light stably, for example, a ballast. The driving power supply can also be designed to output a pulse current to drive the light source to emit pulse light. The reflecting cover can be optically designed to be a spotlight reflector and can also be designed to a diffuse reflection lampshade. The fill light can directly irradiate the cultivated plants, and the beam of the fill light can also irradiate the plants indirectly through the illuminator and further can irradiate the plants when being reflected by the light guide mirror. The light guide mirror can be either fixedly installed or connected with the secondary driving mechanism, and is driven by the secondary driving mechanism to rotate. When the illuminator and/or the light guide mirror is in the moving state, the beam emitted by the fill light driven by the direct current to emit stable light becomes the scanning beam through the moving illuminator and/or light guide mirror, and the irradiated plants obtain light and dark alternate pulse light.

The solar photo-thermal utilization device provided in the present invention consists of the solar cell panel and/or the solar heat collecting tube. The solar photo-thermal utilization device is arranged on the branched light path of the light condenser or the branched light path of the moving light guide mirror or the top and facade of the greenhouse. When the plant cultivation area do not need lighting or it is needed to increase the room temperature and heat, the light condenser driven by the main driving device irradiates the beam to the solar photo-thermal utilization device or the light guide mirror driven by the secondary driving mechanism irradiates the beam to the solar photo-thermal utilization device. It has the beneficial effect that a comprehensive utilization effect of the sunlight is realized.

The present invention can further be additionally provided with a lens dissipating device which can be arranged on the light guide mirror or the illuminator. A dissipating mode of the dissipator may be air cooling, water cooling and semiconductor refrigerating.

The light condenser, the light guide mirror and the illuminator of the present invention can be designed in a manner of being conveniently disassembled and replaced. A blocking device and a locking device that are matched with each other are respectively arranged on the lens body and the fixed bracket or the installation position of the driving mechanism.

The greenhouse of the present invention is a one-layered or multi-layered structure. The facade and/or the top of the greenhouse is provided with one or more light through holes, the main optical axis of the agricultural sunlight transmission lighting system provided by the present invention passes through one of the light through holes, and the light through hole can be communicated with outside and can be designed to be covered with the transparent material. The covering transparent material can be coated with an antireflection film or is covered with a functional film that blocks and weakens lighting of some wave bands. The greenhouse is internally provided with a fixed bracket installation device of the illuminator and/or the light guide mirror and is further provided with a fixed bracket installation device for installing the secondary driving mechanism. An edge of the light through hole formed in the top of the greenhouse is provided with a rainproof protrusion or groove, and the light through hole formed in the facade of the greenhouse is provided with a rainproof structure. The top of the greenhouse is provided with an installation position for installing the main driving mechanism. The cultivation frame in the greenhouse is a horizontal cultivation frame, a perpendicular cultivation frame or a multilayered cultivation frame. A suspended rail or a rail perpendicular to the ground is arranged above the greenhouse, the rail is matched with a power taking device, and an agricultural robot and/or a basket can operate on the suspended rail and/or the basket can be transported on the suspended rail. The material covering the facade and the top of the greenhouse can be an opaque material, for example, cement facade and top. In the multilayered greenhouse, a light through hole penetrating more than two layers is further formed, so that the beam of the light guide mirror can be transmitted across layers. The multilayered greenhouse is further provided with an elevator for people and goods to go up and down. A cross-layer perpendicular rail shall also be arranged, so that the robot operates across layers.

## Claims

1. An agricultural sunlight transmission lighting system, **characterized in that**, the system comprises a controller, a light condenser, a main driving mechanism and an illuminator, wherein controlled by the controller, the light condenser is driven by the main driving mechanism to track the sun so as to reflect and/or refract sunlight to the illuminator, and the illuminator provides lighting to an illuminated object.

2. The agricultural sunlight transmission lighting system according to claim 1, **characterized in that**, the illuminator is a reflector, a lens, a light guide plate or a combination thereof, and provides lighting to microalgae or plants.

3. The agricultural sunlight transmission lighting system according to claim 1 or 2, **characterized in that**, a light path between the light condenser and the illuminator is provided with one or more light guide mirrors, the light guide mirror is in the shape of a plate, a curved plate, a wheel, a pyramid, a prism, a windmill or a fan blade, a reflecting surface is a plane or a curved surface, and the light guide mirror and/or the illuminator are fixedly installed or are driven to move by a secondary driving mechanism.

4. The agricultural sunlight transmission lighting system according to claim 1 or 2, **characterized in that**, a fill light shall be further arranged, the fill light comprising a driving circuit and a light source, and the driving circuit outputs a pulse current to drive the light source to give out pulsed light.

5. The agricultural sunlight transmission lighting system according to claim 3, **characterized in that**, a fill light shall be further arranged in front of the light guide mirror or the illuminator that are driven to move by the secondary driving mechanism, the fill light comprising a driving circuit, a spotlight reflector and a light source, and a beam emitted by the fill light passes through the moving light guide mirror and/or the moving illuminator to provide scanning-type lighting to the illuminated object.

6. The agricultural sunlight transmission lighting system according to claim 1 or 2, **characterized in that**, a solar photo-thermal utilization device shall be further arranged on a branched light path of the light condenser, and the light condenser driven by the main driving mechanism can move the beam from a main light path to the solar photo-thermal utilization device on the branched light path.

7. The agricultural sunlight transmission lighting system according to claim 3 or 5, **characterized in that**, a solar photo-thermal utilization device shall be further arranged on a branched light path of the light condenser or the light guide mirror, and the light condenser driven by the main driving mechanism can move the beam from a main light path to the solar photo-thermal utilization device on the branched light path, or the light guide mirror driven by the secondary driving mechanism can move the beam from the main light path to the solar photo-thermal utilization device on the branched light path.

8. A greenhouse fitting the agricultural sunlight transmission lighting system in one of claims 1-7, **characterized in that**, a facade or a top of the greenhouse is provided with one or more light through holes, a main optical axis of the agricultural sunlight transmission lighting system passes through one of the light through holes, and the greenhouse is internally provided with a supporting device of the illuminator.

9. The greenhouse according to claim 8, **characterized in that**, a suspended rail is arranged above the greenhouse, and an agricultural robot and/or a basket can operate on the suspended rail or be transported on the suspended rail.

10. A method for obtaining a larger effective lighting cultivation area by utilizing sunlight fitting one of claims 1-9, **characterized in that**, the method comprises:
step a, tracking, by a light condenser driven by a main driving mechanism, the sun;
step b, reflecting and/or refracting, by the light condenser, sunlight to an illuminator; and
step c, providing, by the illuminator, lighting to microalgae or plants.
